# EUROPÄISCHE PATENTSCHRIFT

(11) **EP 1 362 660 B1**
(45) Veröffentlichungstag und Bekanntmachung des Hinweises auf die Patenterteilung: **05.12.2007**
(21) Anmeldenummer: 03010431.9
(22) Anmeldetag: 09.05.2003
(51) Int. Cl.: B23K 9/20

(54) **Fügesystemkopf, Fügesystem und Verfahren zum Zuführen und Fügen von Elementen**
Bonding head, bonding system and method of feeding and bonding elements
Tête, système et méthode pour l'approvisionnement et la fixation d'éléments

(30) Priorität: 16.05.2002 DE 10223154
(43) Veröffentlichungstag der Anmeldung: 19.11.2003
(73) Patentinhaber: Newfrey LLC, Newark, Delaware 19711 (US)
(72) Erfinder: Müller, Manfred, 35625 Rechtenbach (DE); Obermann, Wolfgang, 35305 Grünberg (DE); Schmitt, Klaus Gisbert, Dr., 35390 Giessen (DE); Krengel, Michael, 35396 Giessen (DE)
(74) Vertreter: Haar, Lucas Heinz Jörn

(56) Entgegenhaltungen:
- EP-A- 0 715 924
- DE-A- 4 400 350

## Beschreibung

Die vorliegende Erfindung betrifft einen Fügesystemkopf, der an einem beweglichen Gestell, insbesondere an einem Roboter, befestigbar und mit Hilfe des beweglichen Gestells in eine Fügeposition bewegbar ist, mit
- einer Halteeinrichtung für ein Element, das auf ein Bauteil zu fügen ist,
- einer Fügeantriebseinrichtung, um die Halteeinrichtung zum Fügen entlang einer Fügerichtung zu bewegen, und
- einer Zuführeinrichtung zum Zuführen von Elementen zu dem Fügesystemkopf.

Die Gattung ist der DE-A-101 38 959 zu entnehmen.

Ferner betrifft die vorliegende Erfindung ein Fügesystem mit einem Roboter, der in wenigstens zwei Koordinatenachsen beweglich ist, und einem Fügesystemkopf, der an dem Roboter befestigt ist.

Schließlich betrifft die vorliegende Erfindung ein Verfahren zum Zuführen von Elementen von einer stationären Einheit zu einem beweglichen Fügesystemkopf und zum Fügen von zugeführten Elementen mittels des Fügesystemkopfes auf Bauteile.

Ein derartiger Fügesystemkopf, ein solches Fügesystem bzw. ein derartiges Verfahren zum Zuführen und Fügen von Elementen mittels eines Fügesystemkopfes sind allgemein bekannt. Der Begriff Fügen soll sich im vorliegenden Zusammenhang auf sämtliche Verbindungsarten von Elementen mit Bauteilen beziehen, insbesondere Verbindungen von Metallelementen mit Metallbauteilen, beispielsweise durch Kleben, Umformen, wie z.B. Nieten, oder durch Stoffvereinigen, wie z.B. Schweißen, einschließlich von Kurzzeit-Lichtbogenschweißen. Das Kurzzeit-Lichtbogenschweißen wird häufig als Bolzenschweißen bezeichnet, obgleich nicht ausschließlich Bolzen geschweißt werden.

Ein aktuelles System zum Bolzenschweißen im industriellen Einsatz in Verbindung mit einem Roboter ist bekannt aus der Broschüre "Neue TUCKER Technologie. Bolzenschweißen mit System!", Emhart TUCKER, 9/99. Das Bolzenschweißen findet hauptsächlich, nicht jedoch ausschließlich, in der Fahrzeugtechnik Anwendung. Dabei werden Metallelemente, wie Metallbolzen, mit und ohne Gewinde, Ösen, Muttern etc. auf das Blech der Fahrzeugkarosserie aufgeschweißt. Die Metallelemente dienen dann als Anker bzw. Befestigungselemente, um beispielsweise Innenraumausstattungen, Leitungen und ähnliches an dem Karosserieblech festzulegen. Bei dem Fügesystemkopf, der aus der obengenannten Emhart TUCKER-Veröffentlichung bekannt ist, ist die Fügeantriebseinrichtung entweder als elektrischer Linearmotor oder als Kombination aus einem Hubmagneten und einer Feder gebildet.

Die Halteeinrichtung ist gebildet durch eine einteilige Spannzange, die in radialer Richtung elastisch aufweitbar ist. Die Elemente sind in der Regel Schweißbolzen, die einen Kopf mit einem etwas größeren Durchmesser als der Bolzenschaft aufweisen. Die Bolzen werden bei dem bekannten System mittels Druckluft über geeignete Zuführschläuche dem Schweißkopf zugeführt. Dabei werden die Bolzen "Kopf voran" von hinten in die Spannzange gefördert. Dabei schlägt der Bolzen gewöhnlich von innen an die Spannzange an, ohne jedoch durch diese hindurchzutreten. Ein koaxial zu der Spannzange vorgesehener Ladestift wird anschließend betätigt, um den so zugeförderten Bolzen durch die Spannzange hindurchzudrücken. Dabei wird die Spannzange radial elastisch aufgeweitet, wenn der Kopf des Bolzens hindurchtritt. Anschließend schnappt die Spannzange elastisch um den Schaft des Bolzens herum zu und hält diesen in der Lage fest, die durch den Hub des Ladestiftes bestimmt ist.

Die Fügeantriebseinrichtung in Form des Linearmotors (oder der Kombination aus Hubmagnet/Feder) hat einen Hub von wenigen mm. Ferner ist der Schweißkopf an dem Ende eines Armes des Roboters in der Regel über einen pneumatischen oder hydraulischen Schlitten befestigt. Das heißt, der ganze Schweißkopf ist in einer Richtung parallel zur Schweißachse mittels des Schlittens beweglich, der einen wesentlich größeren Hub als der Linearmotor aufweist. Der Schweißkopf weist ferner eine Steuereinrichtung zur Steuerung des Linearmotors und des Ladestiftes auf, die räumlich getrennt von dem Schweißkopf, genauer in einem stationären Zuführer, vorgesehen ist.

Zum Durchführen eines Schweißvorganges wird zunächst der Roboter so programmiert, daß er in eine vorbestimmte Position fährt, in der die Schlitten- und Linearmotorachse senkrecht auf dem Blech stehen, auf das der Bolzen zu schweißen ist. Der Bolzen ist vorgespannt, so daß er gegenüber einem Stützfuß vorsteht. Anschließend wird der Schlitten betätigt, bis der Stützfuß auf dem Blech auftrifft. Der in der Halteeinrichtung gehaltene Bolzen liegt dann auf dem Blech auf. Anschließend erfolgt eine Nullinienbestimmung der Halteeinrichtung in bezug auf das Blech. Alternativ gibt es jedoch auch stützfußlose Verfahren zur Nullinienbestimmung. Anschließend wird bei dem Schweißen mit Stützfuß ein elektrischer Vorstrom eingeschaltet, der durch den Bolzen und das Bauteil hindurch fließt. Dann wird der Bolzen gegenüber dem Bauteil mittels des Linearmotors (Hubvorrichtung) angehoben. Es bildet sich ein Lichtbogen. Anschließend wird auf den Schweißstrom umgeschaltet. Durch den hohen Schweißstrom schmelzen die einander gegenüberliegenden Stirnseiten von Bolzen und Bauteil an. Anschließend wird der Bolzen wieder auf das Bauteil abgesenkt, so daß sich die wechselseitigen Schmelzen vermischen. Mit dem Erreichen des Bauelementes und dem Kurzschluß des Lichtbogens, oder kurz vorher, wird der Schweißstrom abgeschaltet. Die Gesamtschmelze erstarrt, die Schweißverbindung ist erfolgt. Anschließend wird der Schweißkopf von dem angeschweißten Bolzen abgezogen, unter Verwendung des Schlittens. Der Schlitten ist unter anderem deswegen notwendig, weil die Bewegung des Abziehens genau in der Achse des aufgeschweißten Bolzens erfolgen muß. Ansonsten würde aufgrund der einteiligen Spannzange die Gefahr bestehen, den Bolzen und/oder die Spannzange zu beschädigen. Der Roboterarm alleine ist zu einer derart präzisen linearen Bewegung in einer beliebigen Raumausrichtung nicht in der Lage. Denn aufgrund der Überlagerung der hierzu notwendigen gleichzeitigen Regelung mehrerer Bewegungskomponenten von Roboterarmen können derartige Linearbewegungen mit dem Roboter allein nur mit einer gewissen Welligkeit durchgeführt werden.

Der bekannte Schweißkopf weist eine vergleichsweise große axiale Erstreckung auf. Dadurch, daß der Schweißkopf ferner in axialer Richtung von dem Bolzen abgezogen werden muß, ist der Einsatz des Schweißkopfes an schwer zugänglichen Stellen nur eingeschränkt möglich.

Ferner gibt es Entwicklungen, die Robotertechnik zum Zuführen des Bolzens einzusetzen. Dabei nimmt ein separater Greifer vorsortierte Bolzen und bringt sie zur Schweißstelle. Dies ist offenbart in "Bolzenschweißen. Grundlagen und Anwendung" von Trillmich, Welz, Fachbuchreihe Schweißtechnik, DVS Verlag, 1997, Kapitel 9.3. Dabei wird erläutert, daß sich diese Technik besonders bei Kopfbolzen anbietet, die wegen ihrer Form und Größe nicht durch Schläuche geblasen werden können. Diese Bauart wird "Pick-up-System" genannt.

Ferner ist ein Schweißkopf der Firma Nelson bekanntgeworden, bei dem eine Hubvorrichtung an dem Schweißkopf einen kragarmartig seitlich auskragenden Träger auf- und abbewegt. An dem Endbereich des Trägers ist eine Halteeinrichtung mit Spannzange starr montiert. Die Bolzen werden wie bei dem oben beschriebenen Schweißkopf von TUCKER von hinten zu der Spannzange zugeführt, mittels eines Druckluftschlauches, der sich durch den Träger erstreckt. Der Endbereich des Trägers mit der daran festgelegten Haltevorrichtung läßt sich leichter an unzugänglichen Stellen positionieren. Die Hubvorrichtung zur Bewegung des Kragarmes und die zugehörige Steuereinrichtung sind im Anfangsbereich des Trägers angeordnet.

Vor diesem Hintergrund besteht die Aufgabe der Erfindung darin, einen verbesserten Fügesystemkopf, ein verbessertes Fügesystem sowie ein verbessertes Verfahren zum Zuführen und Fügen von zugeführten Elementen anzugeben.

Diese Aufgabe wird bei dem eingangs genannten Fügesystemkopf dadurch gelöst, daß eine Steuereinrichtung zur Steuerung der Fügeantriebseinrichtung an dem Fügesystemkopf räumlich getrennt von der Halteeinrichtung und der Fügeantriebseinrichtung angeordnet ist, so daß die Halteeinrichtung und die Fügeantriebseinrichtung ein Fügewerkzeug mit geringen Abmessungen bilden, und daß Mittel vorgesehen sind, um die zu einer Übergabestation der Zuführeinrichtung zugeführten Elemente jeweils vorne an die Halteeinrichtung zu übergeben.

Bei dem erfindungsgemäßen Fügesystemkopf handelt es sich um ein vollkommen neuartiges Konzept. Dieses basiert auf zwei Grundgedanken. Der eine Gedanke besteht darin, die Steuereinrichtung an dem Fügesystemkopf, jedoch räumlich beabstandet von der Halteeinrichtung und der Fügeantriebseinrichtung vorzusehen. Die Halteeinrichtung und die Fügeantriebseinrichtung können folglich ein Fügewerkzeug mit geringen Abmessungen und geringer Störkantenrelevanz bilden. Der zweite Gedanke besteht darin, die Elemente mittels der Zuführeinrichtung nicht unmittelbar bis zu der Halteeinrichtung zuzuführen, sondern bis zu einer Übergabestation, die von dem Fügewerkzeug ebenfalls beabstandet ist. Zusätzlich sind Mittel vorgesehen, um die zu der Übergabestation zugeführten Elemente jeweils von vorne an die Halteeinrichtung zu übergeben. Hierdurch ist es möglich, die axiale Baulänge des Fügewerkzeuges gering zu halten, da ein Ladestift zum Positionieren der Elemente von hinten durch die Halteeinrichtung hindurch nicht notwendig ist.

Da die Fügeantriebseinrichtung und die Halteeinrichtung in ein Fügewerkzeug integriert sind, ist keine Übertragung einer Hubbewegung über lange Distanzen (Kragarm oder ähnliches) notwendig. Folglich können die Positionierung und der eigentliche Füge- bzw. Schweißvorgang an Ort und Stelle mit hoher Präzision erfolgen.

Bei dem erfindungsgemäßen Fügesystem wird die obige Aufgabe dadurch gelöst, daß an dem Roboterarm ein erfindungsgemäßer Fügesystemkopf befestigt ist.

Das erfindungsgemäße Verfahren zum Zuführen von Elementen von einer stationären Einheit zu einem beweglichen Fügesystemkopf und zum Fügen von zugeführten Elementen mittels des Fügesystemkopfes auf Bauteile beinhaltet die Schritte, ein Element von der stationären Einheit zu dem beweglichen Fügesystemkopf zuzuführen, während der Fügesystemkopf ein bereits zugeführtes Element auf ein Bauteil fügt.

Erfindungsgemäß werden die Elemente von der stationären Einheit nicht in einem Schritt bis hin zu der Halteeinrichtung gefördert, wie im Stand der Technik. Vielmehr erfolgt das Zuführen der Elemente von der stationären Einheit zunächst nur bis zu der Übergabeeinrichtung. Dieser Zuführschritt kann demgemäß erfolgen, während der Fügeschweißkopf selbst ein bereits zugeführtes Element auf ein Bauteil fügt. Durch diese Parallelverarbeitung lassen sich insgesamt kürzere Taktzeiten realisieren.

Von besonderem Vorteil ist es, wenn das Fügewerkzeug an einem Endbereich eines vorstehenden länglichen Trägers gelagert ist. Der räumliche Abstand zwischen Fügewerkzeug und Steuereinrichtung wird folglich durch den länglichen Träger realisiert. Dies ermöglicht, das Fügewerkzeug durch Öffnungen hindurch an unzugängliche Stellen zu verbringen. Dabei ist es besonders bevorzugt, wenn das Fügewerkzeug an dem Endbereich des Trägers beweglich gelagert ist und wenn eine Ladeantriebseinrichtung dazu ausgelegt ist, das Fügewerkzeug zu der Übergabestation zu bewegen, um ein Element an die Halteeinrichtung zu übergeben.

Bei dieser Ausführungsform ist es besonders vorteilhaft, daß durch die bewegliche Lagerung des Fügewerkzeuges ein weiterer Freiheitsgrad zur Positionierung desselben geschaffen wird. Beispielsweise kann das Fügewerkzeug dann, wenn es mittels des Trägers bereits in einen Hohlraum eingeführt ist, noch bewegt werden. Dies ermöglicht ein flexibles Handling. Ferner ermöglicht die bewegliche Lagerung des Fügewerkzeuges, daß die Mittel zur Übergabe eines Elementes von der Übergabestation durch die Beweglichkeit des Fügewerkzeuges realisiert werden. Das Fügewerkzeug "holt" sich folglich die zu fügenden Elemente jeweils selbst von der Übergabestation.

Ferner ist es bei dieser Ausführungsform bevorzugt, wenn das Fügewerkzeug an dem Endbereich des Trägers drehbar gelagert ist und wenn die Ladeantriebseinrichtung dazu ausgelegt ist, das Fügewerkzeug hin zu der Übergabestation zu drehen. Eine Drehbarkeit des Fügewerkzeuges an einem Endbereich des Trägers ist konstruktiv vergleichsweise einfach zu realisieren. Die Verdrehbarkeit als einziger Freiheitsgrad ist für eine Vielzahl von Anwendungsfällen hinreichend. Wenn man berücksichtigt, daß auch der Träger selbst mittels des Roboters in der Regel um seine Längsachse verdrehbar ist und im Raum beliebig positionierbar ist, lassen sich Fügevorgänge an auch sehr unzugänglichen Stellen durchführen. Das Störkantenprofil des Fügewerkzeuges wird durch den notwendigen Schwenkradius bestimmt. Die Ladeantriebseinrichtung dient generell zum einen dazu, jeweils ein Element von der Übergabestation zu holen, und zum anderen auch zum Positionieren des Fügewerkzeuges relativ zu dem Träger in eine Schweißposition. Es versteht sich, daß die Variabilität um so größer ist, je größer der Winkelbereich ist, innerhalb dessen mittels der Ladeantriebseinrichtung Schweißpositionen eingerichtet werden können.

Gemäß einer alternativen Ausführungsform weist die Ladeantriebseinrichtung einen Motor auf, der an dem Endbereich des Trägers angeordnet ist. Bei dieser Ausführungsform läßt sich eine präzise Steuerung des Fügewerkzeuges mit gutem Ansprechverhalten realisieren.

Bei einer alternativen Ausführungsform weist die Ladeantriebseinrichtung einen im Bereich der Steuereinrichtung angeordneten Motor und ein Getriebe auf, das Bewegungen des Motors auf das Fügewerkzeug überträgt. Bei dieser Ausführungsform ergibt sich ein verbesserter Störkantenfreiraum, da der störkantenrelevante Endbereich des Trägers keinen eigenen Motor zum Bewegen des Fügewerkzeuges aufweist. Vielmehr ist der vergleichsweise voluminöse Motor im Bereich der Steuereinrichtung angeordnet und überträgt seine Bewegungen über ein Getriebe auf das Fügewerkzeug. Dabei ist es besonders bevorzugt, wenn der Motor ein Drehmotor, insbesondere ein elektrischer Motor ist und wenn das Getriebe ein Zugmittelgetriebe ist. Mit einem Drehmotor lassen sich Bewegungen präzise und mit hohem Ansprechverhalten realisieren. Mit dem Zugmittelgetriebe lassen sich auf konstruktiv einfache Weise vergleichsweise große Distanzen zwischen dem Bereich der Steuereinrichtung auf der einen Hand und dem Endbereich des Trägers auf der anderen Hand realisieren.

Insgesamt ist es von Vorteil, wenn die Fügeantriebseinrichtung durch einen elektrischen Linearmotor gebildet ist. Bei dieser Ausführungsform ist die Fügeantriebseinrichtung als Hubeinrichtung ausgebildet. Ein elektrischer Linearmotor benötigt nur relativ wenige Leitungen zur Ansteuerung und ist in beiden Hubrichtungen regelbar. Dabei ist es von besonderem Vorzug, wenn die Längsachse der Fügeantriebseinrichtung und die Längsachse der Halteeinrichtung voneinander parallel beabstandet sind. Hierbei ist es möglich, die Halteeinrichtung so zu positionieren, daß auch Schweißpositionen eng an Kanten realisierbar sind. Der Abstand der Längsachsen kann im Bereich einiger weniger cm liegen, gerade hinreichend, um die Halteeinrichtung aus der Projektion der Fügeantriebseinrichtung in Fügerichtung heraus zu versetzen.

Gemäß einer weiteren bevorzugten Ausführungsform weist die Halteeinrichtung eine Mehrzahl von Backen auf, die um die Längsachse der Halteeinrichtung herum verteilt angeordnet und aufeinander zu und voneinander weg beweglich sind, um jeweils ein Element zu halten oder freizugeben. Dabei ist es besonders bevorzugt, wenn die Halteeinrichtung zwei Backen aufweist. Der Begriff "Backen" ist im vorliegenden Zusammenhang breit zu verstehen. Bei den Backen kann es sich beispielsweise auch um längliche Finger handeln. Mit zwei Fingern lassen sich insbesondere rotationssymmetrische oder annähernd rotationssymmetrische Teile vergleichsweise günstig erfassen und sicher halten.

Bevorzugt ist es, wenn die Backen so weit voneinander weg beweglich sind, daß die Halteeinrichtung das Element freigeben kann, indem sie schräg zur Fügerichtung von dem Element abgezogen wird. Dies ermöglicht es, den Vorgang des "Wegfahrens" des Fügesystemkopfes von dem auf das Bauteil gefügten Element allein mittels des Roboters zu realisieren. Ein Schlitten zum Einrichten einer vollkommen geradlinigen Rückfahrbewegung ist dann nicht notwendig. Insofern trägt diese Ausführungsform auch zu einer geringen axialen Erstreckung des Schweißkopfes bei.

Besonders bevorzugt ist es jedoch, wenn die Backen so weit voneinander weg beweglich sind, daß die Halteeinrichtung das Element freigeben kann, indem sie um eine Drehachse herum von dem Element weg verschwenkt wird, die quer zur Fügerichtung ausgerichtet ist. Bei dieser Ausführungsform lassen sich die Backen so weit voneinander weg bewegen, daß das Fügewerkzeug nicht in Fügerichtung weggefahren werden muß. Vielmehr ist es möglich, das Fügewerkzeug nach dem Fügevorgang quer, insbesondere senkrecht zu der Fügerichtung wegzufahren, wobei das Element zwischen den Backen der Halteeinrichtung hindurchtritt. Bei dieser Ausführungsform ist folglich keine Axialbewegung erforderlich. Hierdurch ist es möglich, den Träger mit dem am vorderen Endbereich angeordneten Fügewerkzeug auch durch kleinste Öffnungen hindurch durchzuführen und innerhalb von Hohlräumen Fügevorgänge auszuführen. Der Träger kann nach dem Erreichen der Fügeposition nahezu unverändert positioniert bleiben. Nach dem Fügevorgang wird das Fügewerkzeug quer zur Fügerichtung weg bewegt, insbesondere geschwenkt, und anschließend kann der Träger entlang seiner Längsachse wieder aus dem Hohlraum herausgefahren werden.

Ferner ermöglicht diese Ausführungsform, daß sich die Elemente von der Übergabestation besonders einfach greifen lassen. Das Fügewerkzeug wird bei dieser Ausführungsform so bewegt, insbesondere verschwenkt, daß die Halteeinrichtung bei freigegebenen Backen mit einem Element an der Übergabestation ausgerichtet wird. Anschließend wird das Element von den Backen ergriffen und durch eine Bewegung, insbesondere eine Schwenkbewegung, aus der Übergabestation entnommen.

Insgesamt ist es bevorzugt, wenn ein Backenaktuator vorgesehen ist, der die Backen aktiv öffnet und/oder schließt. Bei dieser Ausführungsform sind die Backen in der Regel als starre Finger ausgebildet. Der Backenaktuator sorgt dafür, daß die Backen entweder aktiv geöffnet werden, um ein Element freizugeben, oder aber aktiv geschlossen werden, um das Element zu halten.

Alternativ hierzu ist es möglich, die Backen elastisch auszubilden oder elastisch zu lagern, derart, daß sie passiv aufeinander zu und/oder voneinander weg bewegbar sind. Bei dieser Ausführungsform können die Backen entweder aus einem elastischen Material ausgebildet sein. In diesem Fall erübrigen sich in der Regel weitere elastische Mittel. Alternativ können die Backen auch als starre Elemente ausgebildet sein und elastisch gelagert sein. Auch ist es im Rahmen dieser Ausführungsform möglich, daß die Backen entweder in Halte- oder in Freigaberichtung elastisch vorgespannt sind. In diesem Fall ist in der Regel ein Aktuator vorzusehen, der die Backen in der jeweiligen anderen Richtung aktiv bewegt.

Insgesamt ist bei einer besonders bevorzugten Ausführungsform die Übergabestation an dem länglichen Träger angeordnet. Hierdurch ist es möglich, relativ zu dem Fügewerkzeug eine feste Relativposition für die Übergabestation zu realisieren. Zudem ist von Vorteil, daß der Querschnitt des Trägers in der Regel kleiner ist als der Querschnitt des Fügewerkzeuges, so daß Bauraum für die Übergabestation zur Verfügung steht.

Ferner ist es insgesamt von Vorteil, wenn die Zuführeinrichtung ein Magazin für Elemente aufweist. Auf diese Weise ist es möglich, immer ein Element an der Übergabestation "griffbereit" bereitzustellen.

Bei dem erfindungsgemäßen Fügesystem ist es von Vorteil, wenn eine stationäre Vereinzelungseinrichtung vereinzelte Elemente hin zu der Zuführeinrichtung des Fügeschweißkopfes fördert. Diese Ausführungsform dient insgesamt einer Steigerung des Automatisierungsgrades. Solche stationären Vereinzelungs- und Zuführeinrichtungen sind an sich im Stand der Technik bekannt. Diese fördern vereinzelte Elemente jedoch in einem Schritt bis hin zu der Halteeinrichtung, wohingegen bei dem erfindungsgemäßen Fügesystem eine Förderung lediglich bis hin zu der Zuführeinrichtung (Übergabestation) erfolgt. Von dort "holt" sich die Halteeinrichtung ein dorthin gefördertes Element.

Es versteht sich, daß die vorstehend genannten und die nach-stehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht eines erfindungsgemäßen Fügesystems;
- Fig. 2: eine alternative Ausgestaltung eines erfindungsgemäßen Fügesystemkopfes;
- Fig. 3: einen Längsschnitt durch eine Ausführungsform einer Halteeinrichtung;
- Fig. 4: einen Querschnitt entlang der Linie IV-IV in Fig. 3;
- Fig. 5: den Endbereich eines erfindungsgemäßen Fügesystemkopfes mit einer alternativen Ausgestaltung eines Fügewerkzeuges;
- Fig. 6: eine Ansicht des Endbereiches des Fügesystemkopfes der Fig. 5 von unten;
- Fig. 7: eine weitere alternative Ausführungsform eines Fügewerkzeuges eines erfindungsgemäßen Fügesystemkopfes;
- Fig. 8: eine schematische Darstellung einer Übergabestation eines erfindungsgemäßen Fügesystemkopfes;
- Fig. 9: eine schematische Darstellung einer alternativen Übergabestation eines erfindungsgemäßen Fügesystemkopfes;
- Fig. 10: eine schematische Darstellung einer weiteren alternativen Ausfiihrungsform einer Übergabestation eines erfindungsgemäßen Fügesystemkopfes;
- Fig. 11: eine schematische Schnittansicht entlang der Linie XI-XI der Fig. 10; und
- Fig. 12: eine schematische Seitenansicht einer alternativen Ausführungsform eines erfindungsgemäßen Fügesystemkopfes.

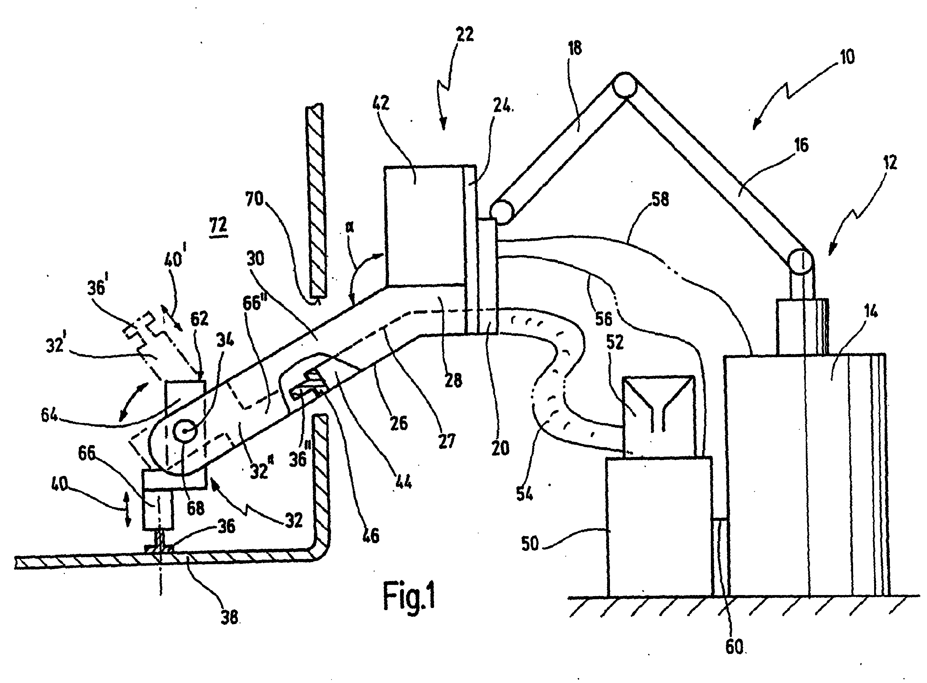

In Fig. 1 ist ein erfindungsgemäßes Fügesystem generell mit 10 bezeichnet. Das Fügesystem 10 weist einen Roboter 12 auf. Der Roboter 12 beinhaltet eine stationäre Basis 14, von der aus sich zwei gelenkig miteinander verbundene Arme 16, 18 erstrecken. Am Ende des Arms 18 ist ein Flansch 20 vorgesehen. An dem Flansch 20 ist ein Fügesystemkopf angebracht, der in Fig. 1 generell mit 22 bezeichnet ist. Der Fügesystemkopf 22 weist eine Grundplatte 24 auf, die an dem Flansch angebracht ist. Von der Grundplatte 24 aus erstreckt sich ein länglicher Träger 26. Der längliche Träger 26 weist einen ersten kurzen Tragabschnitt 28 und einen sich daran anschließenden zweiten länglichen Tragabschnitt 30 auf. Der zweite Tragabschnitt 30 ist gegenüber dem ersten Tragabschnitt 28 um einen Winkel α von 120° abgewinkelt. Der Winkel α liegt vorzugsweise zwischen 60 und 80° bzw. 100 und 120°. Generell ist es jedoch auch denkbar, daß der erste Tragabschnitt 28 und der zweite Tragabschnitt 30 auf einer Achse miteinander ausgerichtet sind. Die Achse des zweiten Tragabschnittes 30 ist in Fig. 1 mit 27 bezeichnet.

An dem Ende des zweiten Tragabschnittes 30 ist ein Fügewerkzeug 32 um eine Drehachse 34 drehbar gelagert. Die Drehachse 34 verläuft senkrecht zur Achse 27 des zweiten Tragabschnittes 30 und ist in der dargestellten Ausführungsform etwa parallel mit der Grundplatte 24 ausgerichtet. Das Fügewerkzeug 32 dient dazu, ein Element, insbesondere einen Schweißbolzen 36, auf ein Bauteil, insbesondere ein Blech 38, zu schweißen.

Obgleich das Fügesystem von der Konstruktion her für eine Vielzahl von Fügearten verwendbar ist, ist eine Ausgestaltung des Fügesystems als Bolzenschweißsystem bzw. Kurzzeit-Lichtbogenschweißsystem mit Hubzündung besonders bevorzugt. Im folgenden wird daher ohne Verlust an Allgemeingültigkeit das Fügesystem als Bolzenschweißsystem und der Fügesystemkopf 22 als Bolzenschweißkopf bezeichnet. Das Fügewerkzeug 32 wird als Schweißwerkzeug 32 bezeichnet. Das Schweißwerkzeug 32 schweißt die Bolzen 36 in einer Linearbewegung (Fügerichtung 40) auf das Bauteil 38.

Der Schweißkopf 22 weist ferner eine Steuereinrichtung 42 auf. Die Steuereinrichtung 42 ist am Anfangsbereich des länglichen Trägers 26 vorgesehen und ist in der dargestellten Ausführungsform auf dem ersten Tragabschnitt 28 montiert, und zwar benachbart zu der Grundplatte 24. Die Steuereinrichtung 42 dient zum Antrieb des Fügewerkzeuges 32 sowie als Schnittstelle zu übergeordneten Steuervorrichtungen.

Der Schweißkopf 22 weist ferner eine Zuführeinrichtung 44 auf. Die Zufilhreinrichtung 44 dient dazu, Bolzen mit dem Schaft voraus von einem Zuführschlauch zu übernehmen und an einer Übergabestation 46 bereitzustellen. Die Zuführeinrichtung 44 ist demzufolge im wesentlichen als Rohr oder Schlauch ausgebildet und erstreckt sich entlang des länglichen Trägers 26. Die Übergabestation 46 liegt in einem mittleren Bereich des zweiten Tragabschnittes 30. In ihr wird jeweils ein Element zur Übergabe an das Schweißwerkzeug 32 bereitgestellt. Dieses Element ist in Fig. 1 mit 36" bezeichnet.

Das Schweißsystem 10 weist ferner eine stationäre Basisstation 50 auf. Die Basisstation 50 dient dazu, dem Schweißkopf 22 Energie zum Schweißen bereitzustellen, und dient als übergeordnete Steuervorrichtung. Die Basisstation 50 ist mit einer Vereinzelungsvorrichtung 52 verbunden. Die Vereinzelungsvorrichtung 52 dient dazu, Bolzen, die in der Regel als Schüttgut geliefert werden, zu vereinzeln und über einen Schlauch 54 zu der Zuführeinrichtung 44 einzeln zu fördern. Zu diesem Zweck weist die Vereinzelungsvorrichtung 52 in der Regel ein Druckluftaggregat auf, um die Elemente 36 pneumatisch fördern zu können.

Ferner ist in Fig. 1 eine Leitung 56 gezeigt, die die Basisstation 50 mit dem Schweißkopf 22 verbindet. Die Leitung 56 ist in der Regel als Leitungssystem realisiert und beinhaltet Leitungen zum Führen des Schweißstromes, Steuerleitungen etc.

Ferner ist in Fig. 1 eine Leitung 58 gezeigt, die den Schweißkopf 22 mit der Basis 14 des Roboters 12 verbindet. Die Leitung 58 ist optional vorgesehen und beinhaltet eine oder mehrere Steuerleitungen. Mittels der Steuerleitungen 58 können die Bewegungen des Roboters 12 mit jenen des Schweißwerkzeuges 32 abgestimmt werden.

Alternativ oder zusätzlich ist die Basis 14 des Roboters 12 mit der Basisstation 50 über eine Leitung 60 verbunden. Demzufolge ist es auch möglich, daß die Abstimmung zwischen Roboter 12 und Schweißkopf 22 über die Leitungen 60, 56 erfolgt. Die Leitungen 56, 58 werden zu der Steuereinrichtung 42 geführt, von der sie teilweise zu dem Schweißwerkzeug 32 durchgeschleift werden (zur Energieversorgung der dortigen Aggregate), teilweise unmittelbar verwendet werden. Das Schweißwerkzeug 32 weist ein Gehäuse 62 auf, das an der Drehachse 34 drehbar gelagert ist. An dem Gehäuse 62 ist eine Fügeantriebseinrichtung 64 in Form eines Linearmotors 64 vorgesehen. Der Linearmotor 64 dient dazu, eine von dem Gehäuse 62 vorstehende Halteeinrichtung 66 zum Halten jeweils eines Bolzens 36 senkrecht zur Drehachse 34 zu bewegen. Der Linearmotor 64 bildet folglich eine Hubvorrichtung zum Vollziehen der Hub- und Tauchbewegungen im Rahmen eines Bolzenschweißvorganges, wie er einleitend beschrieben wurde.

Ferner ist an dem Endbereich des zweiten Tragabschnittes 30 ein Drehantrieb 68 vorgesehen, der dazu dient, das Schweißwerkzeug 32 gesteuert in beliebige Winkelstellungen in bezug auf den zweiten Tragabschnitt 30 zu verdrehen. Der Drehumfang beträgt typischerweise mindestens 270°, in der Regel 360°. Der Drehantrieb 68 dient einerseits dazu, das Schweißwerkzeug 32 in eine jeweils geeignete Schweißposition zu drehen, von denen eine in Fig. 1 in durchgezogenen Linien gezeigt ist. Eine alternative Schweißposition ist durch Strichpunktlinien bei 32' angedeutet. In der weiteren Schweißposition wird das Schweißwerkzeug 32' entlang einer Schweißrichtung 40' dazu benutzt, einen Bolzen 36' auf ein nicht näher dargestelltes Bauteil zu schweißen.

Ferner dient der Drehantrieb 68 als Ladeantriebseinrichtung. Zu diesem Zweck wird das Schweißwerkzeug 32 in eine Position verdreht, die in Fig. 1 gestrichelt dargestellt ist. In dieser Position ist die Halteeinrichtung 66" fluchtend mit der Übergabestation 46 ausgerichtet und kann in dieser Position einen dort bereitstehenden Bolzen 36" ergreifen und für einen darauffolgenden Schweißvorgang übernehmen.

Obgleich in der dargestellten Ausführungsform die Ladeantriebseinrichtung allein durch den Drehantrieb 68, beispielsweise einen Elektromotor, gebildet ist, sind auch Varianten hiervon denkbar. So kann die Ladeantriebseinrichtung beispielsweise dadurch gebildet werden, daß das - nicht drehbare - Schweißwerkzeug 32 an dem Träger 26 in Längsrichtung verschoben wird, um ein Beispiel zu nennen. Es versteht sich, daß dann die Übergabestation 46 an entsprechend anderer Stelle angeordnet werden müßte.

Es ist leicht erkennbar, daß das Schweißwerkzeug 32 mit sehr geringen Abmessungen ausgebildet werden kann. Zum einen ist das Schweißwerkzeug 32 von der Steuereinrichtung 42 räumlich getrennt. Zum anderen ist das Schweißwerkzeug 32 von der pneumatischen Bolzenzuführeinrichtung entkoppelt. Das heißt, an dem Schweißwerkzeug 32 müssen keine pneumatischen oder hydraulischen Leitungen angeflanscht werden. Die elektrische Versorgung des Linearmotors 64 und/oder des Drehantriebs 68 ist vergleichsweise leicht zu realisieren. Gleiches gilt für die Betätigung der Halteeinrichtung 66, sofern diese aktiv elektrisch betätigt wird.

Dadurch, daß die Bolzen 36 in die Halteeinrichtung 66 nicht von hinten, sondern von vorne eingesetzt werden, ist kein Ladestift wie im Stand der Technik notwendig. Das Schweißwerkzeug 32 kann daher in axialer Richtung kurz bauen.

Es versteht sich, daß anstelle eines Linearmotors als Fügeantriebseinrichtung 64 auch eine Kombination aus einer Feder und einem Hubmagneten vorgesehen sein kann.

Ferner versteht sich, daß der Drehantrieb 68 als elektrischer Schrittmotor mit einer Genauigkeit von < 1°, besser noch 0,5°, ausgebildet sein kann.

Die Parametervorgaben zur Drehbewegung sind zum einen schweißprogrammbezogen und zum zweiten roboterbewegungsprogrammbezogen. Jede Schweißposition hat ihr eigenes Schweißprogramm und ihr eigenes Roboterbewegungsprogramm. Durch den Bezug der Parameterdaten auf die einzelnen Schweiß- und Roboterbewegungsprogramme wird sichergestellt, daß erstens der Bolzen 36 immer senkrecht zur Oberfläche des Bauteils 38 steht, und daß zweitens das Schweißwerkzeug 32 bei der Roboterbewegung in einer Lage ist, die dem Roboter einen größtmöglichen Bewegungsfreiraum auf dem Weg zur Schweißposition gibt. Die Steuerung der Drehbewegung des Schweißwerkzeuges 32 kann über die Basisstation 50 und/oder über die Basis 14 des Roboters 12 erfolgen.

Das schräge Abwinkeln des zweiten Tragabschnittes 30 in bezug auf den ersten Tragabschnitt 28 bietet zum einen einen verbesserten Störkantenfreiraum. Zum zweiten läßt sich die Zuführeinrichtung 44 leichter realisieren, da die Bolzen, wie gezeigt, durch Schwerkraft und/oder Blasluft an der Übergabestation 46 gehalten werden.

In Fig. 1 ist ferner gezeigt, daß das Bauteil 38 als Winkelbauteil mit einer relativ kleinen Öffnung 70 ausgestaltet ist. Gesehen von dem Roboter 12 aus befindet sich die gewünschte Schweißposition im Inneren eines Hohlraumes 72.

Es ist leicht zu erkennen, daß das erfindungsgemäße Bolzenschweißsystem 10 ganz besonders gut dazu geeignet ist, diese Aufgabe zu erfüllen. Zum Einführen des zweiten Tragabschnittes 30 durch die Öffnung 70 kann das Schweißwerkzeug 32 in eine Stellung verdreht werden, in der es weitgehend mit dem zweiten Tragabschnitt 30 fluchtet, beispielsweise der Position 32" in Fig. 1.

Nach dem Einführen in den Hohlraum 72 wird das Schweißwerkzeug 32 in die mit durchgezogenen Linien gezeigte Schweißposition verdreht. Zuvor wird ein Bolzen 36 von der Übergabestation 46 übernommen, so daß er sich in der Halteeinrichtung 66 befindet.

Anschließend wird in an sich herkömmlicher Weise ein Bolzenschweißvorgang durchgeführt, wie er einleitend erläutert wurde.

Wie nachstehend noch im Detail ausgeführt werden wird, ist die Halteeinrichtung 66 vorzugsweise so ausgebildet, daß sie den angeschweißten Bolzen 36 in einer Richtung quer zur Schweißrichtung 40 freigeben kann. Demzufolge ist es möglich, das Fügewerkzeug 32 unmittelbar nach dem Schweißen wieder in die fluchtende Position 32" zu verdrehen, ohne daß der zweite Tragabschnitt 30 eine Bewegung in Schweißrichtung 40 vollziehen muß. Sobald die fluchtende Stellung 32" erreicht ist, kann der zweite Tragabschnitt 30 wieder durch die Öffnung 70 herausgezogen werden. Der Roboter 12 führt den Schweißkopf 22 dann zur nächsten Schweißposition.

Die Drehachse 34 bildet für den Roboter 12 eine weitere Roboter-Drehachse. Die Positionierung an einer Schweißposition kann folglich einfacher erfolgen. Dies gilt um so mehr, als die weitere Drehachse nahe an der Schweißposition liegt.

Ein weiterer Vorteil des erfindungsgemäßen Schweißsystems 10 ergibt sich folgendermaßen. Im Stand der Technik war der Schweißkopf insgesamt störkantenrelevant. Daher hat man im Stand der Technik an dem Schweißkopf keine pneumatischen Ventile vorgesehen. Dies bedingte jedoch eine sehr komplizierte Verkabelung zwischen der Basisstation 50 und dem Schweißkopf 22.

Durch die räumliche Trennung der Steuereinrichtung 42 von dem Schweißwerkzeug 32 an dem Schweißkopf 22 ist die Steuereinrichtung 42 selbst nicht störkantenrelevant. Folglich lassen sich in die Steuereinrichtung 42 an dem Schweißkopf 22 Ventile integrieren, so daß die Anzahl und Komplexität der Zuführleitungen reduziert werden kann. Da die Steuereinrichtung 42 an dem Schweißkopf 22 vorgesehen ist, ist keine aufwendige elektrische Verkabelung zwischen Schweißkopf 22 und Basisstation 50 notwendig. Beispielsweise ist es möglich, daß die Zuführleitungen 56 in einem Schlauchpaket lediglich enthalten ein Schweißkabel, zwei Hilfsspannungsversorgungen für den Linearmotor sowie eine 24-Volt-Versorgung für die Steuereinrichtung, zwei Lichtwellenleiter zur seriellen Übertragung von Steuer- und Meßdaten, sowie den Zuführschlauch 54. In einer erweiterten Version könnte das Schlauchpaket auch ergänzt werden durch eine Schutzgaszuleitung bzw. eine Blas-/Saugleitung, beispielsweise zur Farbmarkierung.

Das Schlauchpaket kann folglich weniger schwer, weniger verwindungssteif und folglich sicherer sein.

Ferner wird durch die Entkopplung von Zuführeinrichtung 44 und Schweißwerkzeug 32 ermöglicht, daß die Bolzen 36 parallel zu dem Bolzenschweißprozeß zur Übergabestation 46 zugeführt werden können.

Im Stand der Technik erfolgen das Bolzenzuführen und das Bolzenschweißen rein seriell. Daher sind Zykluszeiten von < 1 sec nur sehr schwer und unter speziellen Randbedingungen zu erreichen.

Erfindungsgemäß kann unmittelbar nach dem Übernehmen eines Bolzens von der Übergabestation 46 zum Einleiten eines Bolzenschweißvorganges ein weiterer Bolzen von der Vereinzelungsvorrichtung 52 über den Schlauch 54 und die Zuführeinrichtung 44 zu der Übergabestation 46 gefördert werden. Dies kann erfolgen, während das Schweißwerkzeug 32 einen Bolzenschweißvorgang ausführt.

Ferner kann bei der Bewegung des Trägers 26 von einer Schweißposition zur nächsten das Schweißwerkzeug 32 zur Übergabestation 46 verschwenkt und anschließend in die richtige Stellung für die neue Schweißposition verschwenkt werden. Auch durch diese Parallelität wird insgesamt erreicht, daß Schweißzykluszeiten von deutlich kleiner als 1 sec erreichbar sind.

Obgleich als zu schweißende Elemente dem Grunde nach beliebige Formen in Frage kommen, so sind doch mittels Druckluft zuführbare Elemente, insbesondere rotationssymmetrische Elemente, besonders dazu geeignet, mit dem erfindungsgemäßen Fügesystem bearbeitet zu werden.

Die weitere Schweißposition 32' kann beispielsweise eine Überkopfposition sein, wie die gezeigte Position 32'. Diese kann erreicht werden, ohne den Träger 26 drehen zu müssen. Hierdurch werden Beanspruchungen der Zuführkabel und -schläuche vermieden.

In der folgenden Beschreibung von Details und Abwandlungen des in Fig. 1 gezeigten Fügesystems werden gleiche und ähnliche Elemente mit den selben Bezugsziffern bezeichnet. Bei identischer Bezeichnung ist generell von einer gleichen oder ähnlichen Funktionsweise auszugehen, es sei denn, nachstehend ist ausdrücklich anderes vermerkt. Soweit auf einzelne Elemente des Fügesystems eingegangen wird, ist davon auszugehen, daß die Funktion im übrigen identisch oder ähnlich ist zu der Funktion des Fügesystems 10 der Fig. 1. Ferner versteht sich, daß folgende Bezugnahmen auf Schweißsysteme, -köpfe oder -werkzeuge sich auf derartige Elemente zum Fügen allgemein beziehen sollen, beispielsweise auch auf Niet- oder Klebeprozesse.

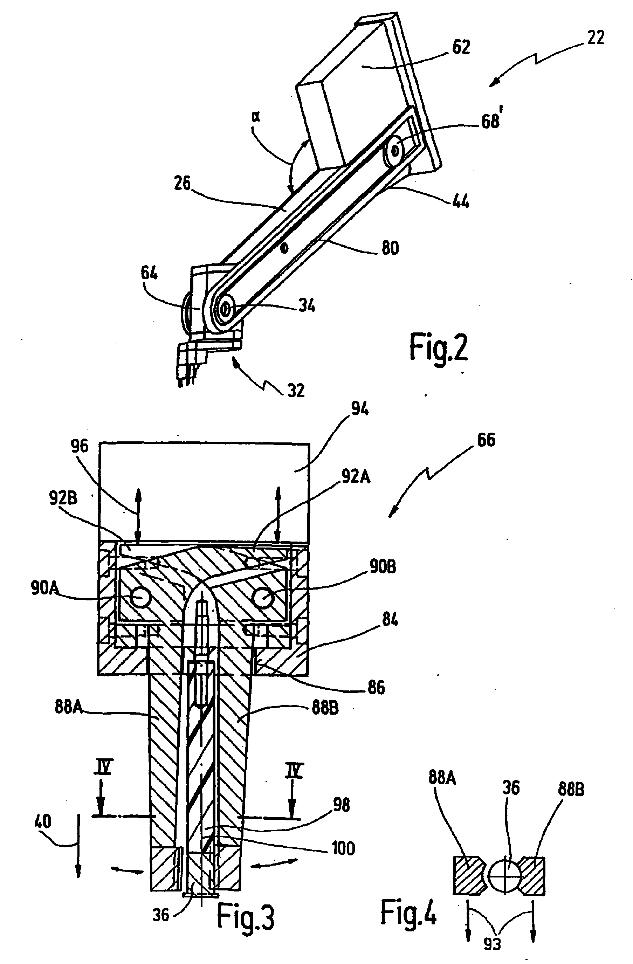

In Fig. 2 ist eine alternative Ausführungsform eines Schweißkopfes 22 gezeigt. Im Unterschied zu dem Schweißkopf 22 der Fig. 1 ist ein Drehantrieb 68' zum Drehen des Schweißwerkzeugs 32 nicht im Endbereich des zweiten Tragabschnittes 30 vorgesehen, sondern im Bereich der Steuereinrichtung 42. Die Drehbewegungen des Drehantriebes 68' werden mittels eines Riemenantriebes 80 auf das Schweißwerkzeug 32 übertragen. Der Riemenantrieb 80 verläuft entlang des länglichen Trägers 26. Der längliche Träger 26 ist in der Darstellung der Fig. 2 durch zwei parallele Arme gebildet, zwischen deren Endbereichen das Schweißwerkzeug 32 drehbar gelagert ist.

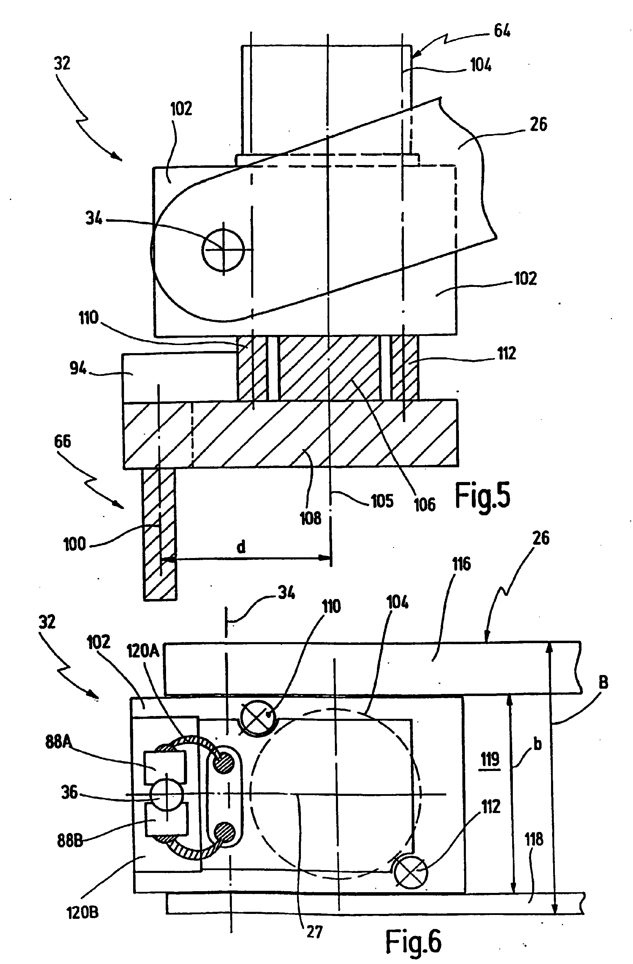

In den Fig. 3 und 4 ist eine Ausführungsform einer Halteeinrichtung 66 dargestellt. Die Halteeinrichtung 66 weist ein Gehäuse 84 auf, das eine nach unten in Fügerichtung hin weisende Öffnung 86 aufweist. Die Halteeinrichtung 66 weist zwei an dem Gehäuse 84 begrenzt verschwenkbar gelagerte Backen 88A, 88B auf, die aus einem im wesentlichen unelastischen Material gebildet sind. Die Backen 88A, 88B bilden eine Spannzange, indem ein Element 36 zwischen den Enden der Backen 88A, 88B mit einer vorbestimmten Kraft eingeklemmt werden kann.

Die Backen 88A, 88B sind jeweils einstückig mit einem Hebelabschnitt 92A, 92B verbunden. In bezug auf Achsen 90A, 90B, an denen die Backen 88A, 88B gelagert sind, erstrecken sich die Hebelabschnitte 92A, 92B in die jeweils andere Richtung. Die Hebelabschnitte 92A, 92B sind dabei gegenüber der Fügerichtung 40 so abgebogen, daß sie sich überschneiden. Durch Druck auf die Hebelabschnitte 92A, 92B von oben (in der Darstellung der Fig. 3) werden die Backen 88A, 88B folglich voneinander weg bewegt, um den Bolzen 36 freizugeben. Dies ist für den Backen 88A in Fig. 3 dargestellt. Man erkennt, daß der Backen 88A den Bolzen 36 in Richtung quer zur Fügerichtung 40 (also in Fig. 3 aus der Papierebene heraus) vollständig freigibt. Demzufolge kann die Halteeinrichtung 66 bei geöffneten Backen 88A, 88B quer zur Fügerichtung 40 und senkrecht zur Ebene der Backen 88A, 88B bewegt werden, ohne den Bolzen 36 zu berühren. Die Bewegungsrichtung der Backen 88A, 88B bei diesem Vorgang ist in Fig. 4 mit 93 bezeichnet.

Zum Betätigen der Hebelabschnitte 92A, 92B ist ein Aktuator 94 vorgesehen, der vorzugsweise elektrisch angesteuert wird. Der Aktuator 94 öffnet und schließt die Backen 88A, 88B jeweils aktiv. Es versteht sich, daß der Aktuator 94 zu diesem Zweck als bidirektionaler Antrieb ausgebildet sein muß.

Die aktive Betätigung der Backen 88A, 88B hat den Vorteil, daß der Bolzen 36 mit einer definierten Kraft (z.B. 20 N) gehalten werden kann. Die Herleitung der Spannkraft aus der Elastizität der einzelnen Finger der Spannzange des Standes der Technik entfällt. Folglich läßt sich eine deutlich höhere Lebensdauer erzielen. Die Betätigungsrichtung des Aktuators 94 ist in Fig. 3 bei 96 gezeigt.

An ihren Enden sind die Backen 88A, 88B so ausgeformt, daß sie den jeweiligen Bolzen 36 sicher ergreifen können. Hierzu kann es sinnvoll sein, geeignete Aufsätze auf die Backen 88A, 88B aufzusetzen, die an unterschiedliche Bolzen 36 angepaßt sein können.

Von der Unterseite des Gehäuses 94 erstreckt sich, wie es in Fig. 3 gezeigt ist, ein Positionierstift 98. Der Positionierstift bzw. Anschlagstift 98 ist starr mit dem Gehäuse 84 verbunden. Er dient dazu, bei Übernahme eines Bolzens 36 von der Übergabestation 46 zu gewährleisten, daß der Bolzen 36 in bezug auf die Halteeinrichtung 66 eine definierte Position einnimmt, und als Anschlag, um beim Schweißen die Axialkraft aufzunehmen.

Der bidirektionale aktive Aktuator kann gebildet sein durch einen pneumatischen oder hydraulischen Antrieb. Vorzugsweise ist er jedoch gebildet durch eine Kombination von zwei Elektromagneten oder durch einen ungeregelten Linearmotor nach dem Prinzip 'bewegte Spule' oder 'bewegter Dauermagnet'.

Ferner ist es möglich, den Aktuator 94 semi-aktiv auszubilden. Dabei erfolgt das Öffnen der Backen 88A, 88B beispielsweise durch einen Elektromagneten. Wenn dieser abgeschaltet wird, sorgen geeignet angeordnete Federn dafür, daß ein Bolzen 36 mit einer definierten Kraft von den Backen 88A, 88B ergriffen wird.

Zum Schweißen werden die Backen 88A und/oder 88B mit Schweißstrom versorgt, der auf den Bolzen 36 geleitet wird. Die definierte Kraft sorgt für einen sicheren, verschleißarmen Stromübergang. Aus diesem Grund versteht sich, daß die Backen 88A, 88B aus einem leitenden Metall hergestellt sind. Der Positionierstift 98 hingegen sollte nichtleitend ausgebildet oder gegen das Gehäuse 84 isoliert ausgebildet sein.

Alternativ zu einer aktiven oder semi-aktiven Halteeinrichtung 66 ist es auch möglich, Backen vorzusehen, die elastisch ausgebildet sind und die ein seitliches Einführen des Bolzens 36 zwischen sich (entlang der Richtung 93) ermöglichen und die bei einer Bewegung quer zu einem angeschweißten Bolzen 36 diese ohne wesentliche Kraftausübung freigeben.

In Fig. 3 ist die Längsachse der Halteeinrichtung 66 mit 100 bezeichnet.

In den Fig. 5 und 6 ist eine weitere alternative Ausführungsform eines Schweißwerkzeuges 32 gezeigt.

Das Schweißwerkzeug 32 weist ein Werkzeuggehäuse 102 auf, an dem ein Linearmotor 104 einer Fügeantriebseinrichtung 64 festgelegt ist. Die Achse bzw. Mittenachse des Linearmotors 104 ist bei 105 gezeigt. Es ist dargestellt, daß die Achse 100 der Halteeinrichtung 66 und die Achse 105 des Linearmotors 104 um einen Abstand d voneinander beabstandet sind. Hierdurch wird die Halteeinrichtung 66 aus der Projektion des Linearmotors 104 in Fügerichtung heraus versetzt. Dadurch ist es möglich, die Halteeinrichtung 66 und folglich einen gehaltenen Bolzen 36 näher an einer Kante bzw. einer störenden Wand zu positionieren. Insgesamt wird hierdurch die Flexibilität des Schweißkopfes 22 erhöht.

Der Linearmotor 104 weist einen Ankerabschnitt 106 auf, der mit einer quer zur Fügerichtung verlaufenden Führungsplatte 108 verbunden ist. Von der Führungsplatte 108 erstrecken sich ferner zwei diagonal in bezug auf den Linearmotor 104 angeordnete Führungsstangen 110, 112.

Die Führungsstangen 110, 112 sorgen dafür, daß die Führungsplatte 108 verkantungsfrei geführt wird.

Von der Unterseite der Führungsplatte 108 erstreckt sich die Halteeinrichtung 66. Ein Aktuator zur Betätigung der Halteeinrichtung 66 kann beispielsweise an der Oberseite der Führungsplatte 108 oder darin integriert ausgebildet sein.

In Fig. 6 ist gezeigt, daß der Träger 26 aus einem vergleichsweise massiven Tragarm 116 und einem parallel hierzu verlaufenden, weniger massiven Spannarm 118 gebildet ist. Das Schweißwerkzeug 32 ist zwischen den Armen 116, 118 entlang der Drehachse 34 drehbar gelagert.

In Fig. 6 sind ferner Stromkabel 120 zum Zuführen von Strom zu den Backen 88A, 88B angedeutet.

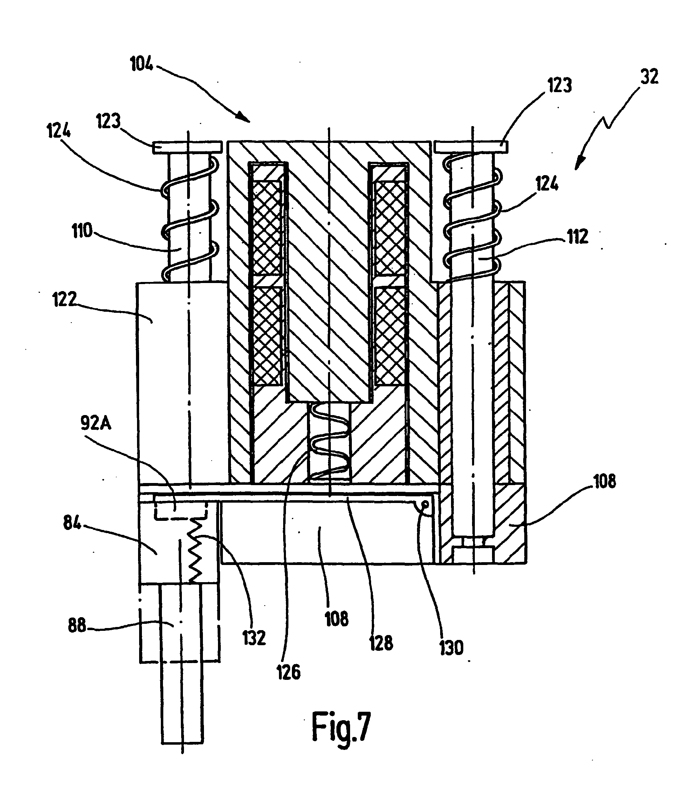

Eine weitere alternative Ausgestaltung eines Fügewerkzeuges 32 ist in Fig. 7 gezeigt.

Das Schweißwerkzeug 32 weist ein Linearmotorgehäuse 122 auf. An den Oberseiten der Führungsstangen 110, 112 sind jeweils Flansche 123 vorgesehen. Zwischen den Flanschen 123 und dem Linearmotorgehäuse 122 sind Druckfedern 124 angeordnet, die um die Führungsstangen 110, 112 herum ausgebildet sind.

Der Linearmotor 104 ist durch die Druckfedern 124 folglich so vorgespannt, daß sich die damit bewegte Führungsplatte 108 in der zurückgezogenen, also nicht ausgefahrenen Position befindet.

Zusätzlich zu den Druckfedern 124 oder alternativ hierzu kann im Inneren des Linearmotorgehäuses 122 eine weitere Druckfeder 126 vorgesehen sein.

Ferner ist gezeigt, daß an der Oberseite der Führungsplatte 108 ein Klappmagnet 128 an einer Achse 130 angelenkt ist. Der Klappmagnet 128 dient dazu, die Hebelabschnitte 92A, 92B nach unten zu drücken, um die Backen 88 zu öffnen. Generell sind die Hebelabschnitte 92 jedoch mittels einer Spannfeder 132 in Richtung der Schließstellung der Backen 88 vorgespannt.

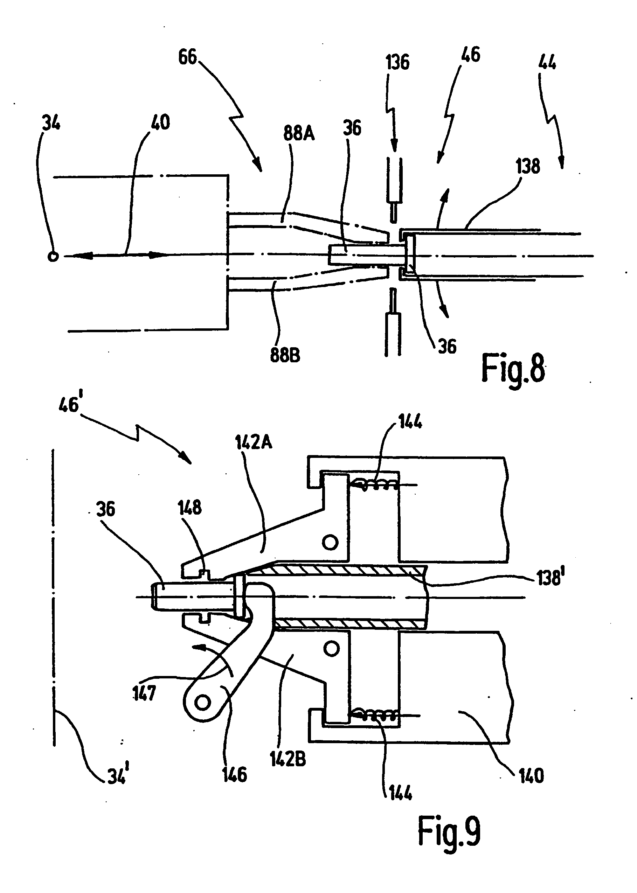

In Fig. 8 ist eine erste Ausführungsform einer Übergabestation 46 der Zuführeinrichtung 44 gezeigt. An der Übergabestation 46 sind zwei gegenüberliegende Sensoren 136 (beispielsweise eine Lichtschranke) vorgesehen, die erfassen, ob sich ein Bolzen 36 in der Übergabestation 46 befindet oder nicht.

Die Zuführeinrichtung 44 ist im wesentlichen durch ein Rohr bzw. einen Schlauch 138 gebildet, der im Bereich der Übergabestation 46 nach innen abgebogen ist. Die Bolzen 36 werden mit dem Schaft voran aus der Vereinzelungsvorrichtung 52 durch die Zuführeinrichtung 44 hindurch zugefördert. Folglich schlägt der Kopf des Bolzens 36 an der Einbördelung des Rohrs 138 an und bleibt so in der Übergabestation 46. Dabei erstreckt sich der Schaft des Bolzens 36 aus dem Rohr 138 heraus.

Die Halteeinrichtung 66 kann nunmehr mit geöffneten Backen 88A, 88B hin zu dem Bolzen 36 geführt werden und den Bolzen 36 ergreifen. Anschließend wird die Halteeinrichtung 66 wieder zurückverschwenkt, in der Darstellung der Fig. 8 aus der Papierebene heraus. Es versteht sich, daß an der Übergabestation 46 eine geeignete seitliche Ausnehmung in dem Rohr 138 vorgesehen sein muß, die in Fig. 8 nicht näher dargestellt ist.

Eine alternative Ausführungsform einer Übergabestation 46' ist in Fig. 9 gezeigt. Bei dieser Ausführungsform ist ein Rohr 138' der Zuführeinrichtung 44' zum Ende hin offen. An einem Übergabegehäuse 140 sind zwei Spannbacken 142 drehbar gelagert. Die Spannbacken 142 sind mittels zweier Federn 144 in eine Position vorgespannt, bei der ihre Innenseiten den Austritt eines Bolzens 36 aus dem Rohr 138' versperren. Der Bolzen 36 wird bei einer Zuförderung hierdurch abgebremst.

Dabei ist ein Positionierhebel 146 aus der in Fig. 9 gezeigten Darstellung seitlich verschwenkt, um den Bolzen 36 durchzulassen. Anschließend wird der Positionierhebel 146 verschwenkt, wie es bei 147 gezeigt ist. Hierdurch drückt der Bolzen 36 die Spannbacken 142A, 142b auseinander und wird von dem Rohr 138' weg versetzt, bis der Kopf des Bolzens 36 in eine Ringausnehmung 148 schnappt. Die Ringausnehmung 148 ist durch die Innenseiten der Spannbacken 142A, 142B gebildet. In dieser Position wird der Bolzen 36 definiert mit einer bestimmten Kraft gehalten. Die Halteeinrichtung 66 kann, wie in der Fig. 8, den Schaft des Bolzens 36 ergreifen und diesen seitlich aus der Ringausnehmung 148 herausziehen.

Gegenüber der Ausführungsform der Fig. 8 hat diese Ausführungsform den Vorteil, daß der Bolzen 36 sich in der Übergabestation 46' in einer definierten Lage befindet und mit einer definierten Kraft gehalten wird, so daß ein sicheres Ergreifen des Bolzens 36 mittels der Halteeinrichtung 66 gewährleistet ist. Es versteht sich, daß auch bei der Übergabestation 46' geeignete Sensoren zur Erfassung eines Bolzens 36 in der Übergabeposition vorgesehen sein können.

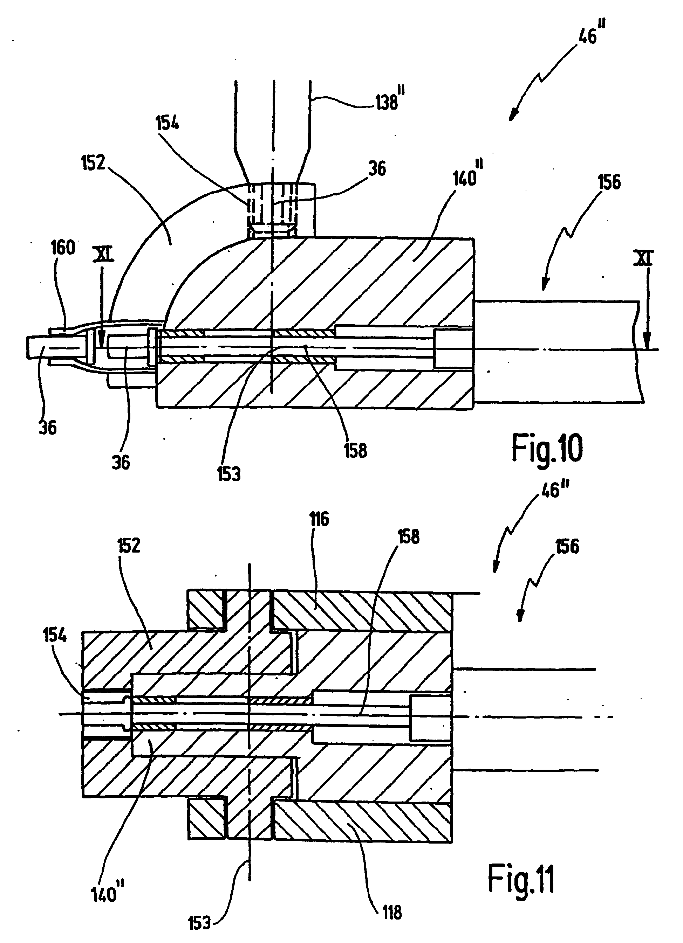

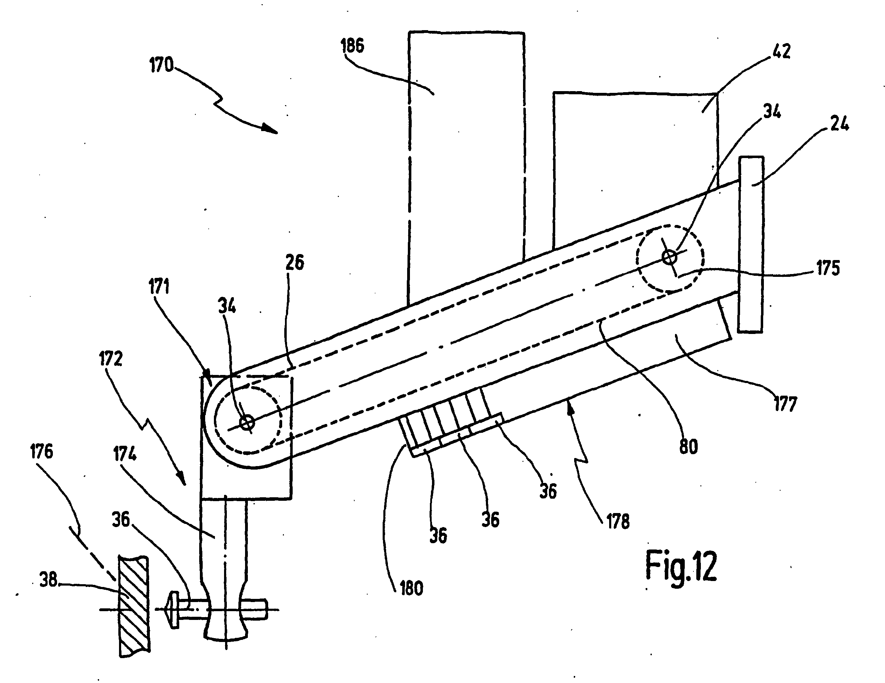

Eine dritte Ausführungsform einer Übergabestation 46" ist in den Fig. 10 und 11 dargestellt. Bei dieser Ausführungsform werden die Bolzen 36 über ein Rohr 138" in eine Bolzenaufnahme 154 eines verschwenkbaren Rotationssegmentes 152 gefördert. Das Rotationssegment 152 ist um eine Rotationsachse 153 drehbar, die quer zur Achse des Rohrs 138" und quer zur Ausrichtung des Bolzens 36 in der Übergabeposition ausgerichtet ist.

In den Fig. 10 und 11 befindet sich das Rotationssegment 152 in einer Übergabeposition. In dieser Position dient ein Pneumatikzylinder 156 dazu, den Bolzen 36 mittels eines Stößels 158 zwischen zwei Spannbacken 160 zu drücken, zwischen denen der Bolzen 36 dann definiert gehalten wird. Anschließend wird das Rotationssegment 152 zurück verdreht, um einen weiteren Bolzen 36 in der gestrichelt gezeigten, mit dem Rohr 138" fluchtenden Aufnahmeposition aufzunehmen. Diese Ausführungsform hat den Vorteil, daß die Bolzen 36 mit hoher Geschwindigkeit durch das Rohr 138" zugefördert werden können. Somit lassen sich kurze Taktzeiten erzielen.

Eine weitere Ausführungsform eines erfindungsgemäßen Schweißkopfes ist in Fig. 12 generell mit 170 bezeichnet. Der Schweißkopf 170 weist am vorderen Ende des Trägers 26 ein Schweißwerkzeug 171 auf, das lediglich ein drehbar an dem Träger 26 gelagertes Gehäuse und eine daran festgelegte Halteeinrichtung 172 aufweist. An dem Schweißwerkzeug 171 ist kein Schweißantriebsmotor, insbesondere kein Linearmotor, vorgesehen.

Die Halteeinrichtung 172 weist zwei Backen 174 auf, zwischen denen ein Bolzen 36 so gehalten ist, daß er tangential zu einem Umkreis um die Drehachse 34 herum ausgerichtet ist. Mit anderen Worten erfolgt ein Fügevorgang nicht entlang einer geradlinigen Bewegung sondern entlang einer Kreisbahn. Die entsprechende Führungsrichtung ist in Fig. 12 als Teilkreis 176 gezeigt.

Als Fügeantriebseinrichtung dient bei dieser Ausführungsform ein Drehantrieb 175, der im Bereich der Steuereinrichtung 42 angeordnet ist. Drehbewegungen des Drehantriebs 175 werden über einen Riemenantrieb 80 auf das Schweißwerkzeug 171 übertragen. Es versteht sich, daß der Drehantrieb 175 vorzugsweise ein präziser elektrischer Schrittmotor ist, mit dem sich die diffizilen Bewegungen des Bolzens 36 während eines Bolzenschweißvorganges realisieren lassen. Der Drehantrieb 175 dient damit gleichzeitig auch als Ladeantrieb, indem er verschwenkt wird, um jeweils einen neuen Bolzen 36 von einer Übergabestation 180 einer Zuführeinrichtung 178 zu übernehmen. In der Zuführeinrichtung 178 werden die Bolzen 36 nicht hintereinander sondern nebeneinander zugeführt, so daß die Halteeinrichtung 172 die Bolzen 36 quer zu ihrer eigenen Erstreckung erfassen kann.

Es versteht sich, daß die Zuführeinrichtung 178 entweder über geeignete Mittel zum Umwandeln der Längsbewegung aus der Vereinzelungsvorrichtung 52 in die Querausrichtung aufweisen kann, die in Fig. 12 gezeigt ist. Alternativ hierzu ist es auch möglich, die Bolzen 36 bereits aus der Vereinzelungseinrichtung 52 in Querlage heranzufördern.

Ferner ist in Fig. 12 schematisch ein an dem Träger 26 vorgesehenes Magazin 186 vorgesehen. Das Magazin 186 kann als Vorratsmagazin für eine Vielzahl von Bolzen 36 dienen, die dann mittels einer geeigneten integrierten Vereinzelungsvorrichtung zu der Zuführeinrichtung 178 bzw. der Übergabestation 180 übergeben werden.

Es versteht sich, daß ein derartiges Magazin 186 auch bei den Ausführungsformen der Fig. 1 bis 11 anstelle einer stationären Vereinzelungsvorrichtung 52 oder zusätzlich hierzu Verwendung finden kann.

## Patentansprüche

1. Fügesystemkopf (22), der an einem beweglichen Gestell (12), insbesondere an einem Roboter (12), befestigbar und mit Hilfe des beweglichen Gestells (12) in eine Fügeposition bewegbar ist, mit
- einer Halteeinrichtung (66) für ein Element (36), das auf ein Bauteil (38) zu fügen ist,
- einer Fügeantriebseinrichtung (64), um die Halteeinrichtung (66) zum Fügen entlang einer Fügerichtung (40) zu bewegen, und
- einer Zuführeinrichtung (44) zum Zuführen von Elementen (36) zu einer Übergabestation (46) im Fügesystemkopf (22),
**dadurch gekennzeichnet, daß**
eine Steuereinrichtung (42) zur Steuerung der Fügeantriebseinrichtung (64) an dem Fügesystemkopf (22) räumlich beabstandet von der Halteeinrichtung (66) und der Fügeantriebseinrichtung (64) angeordnet ist, so daß die Halteeinrichtung (66) und die Fügeantriebseinrichtung (64) ein Fügewerkzeug (32) mit geringen Abmessungen bilden, und daß Mittel (68) vorgesehen sind, um die zu einer Übergabestation (46) der Zuführeinrichtung (44) zugeführten Elemente (36) jeweils von vorne an die Halteeinrichtung (66) zu übergeben.

2. Fügesystemkopf nach Anspruch 1, **dadurch gekennzeichnet, daß** das Fügewerkzeug (32) an einem Endbereich eines vorstehenden länglichen Trägers (26) gelagert ist.

3. Fügesystemkopf nach Anspruch 2, **dadurch gekennzeichnet, daß** das Fügewerkzeug (32) an dem Endbereich des Trägers (26) beweglich gelagert ist und daß eine Ladeantriebseinrichtung (68) dazu ausgelegt ist, das Fügewerkzeug (32) zu der Übergabestation (46) zu bewegen, um ein Element (36) an die Halteeinrichtung (66) zu übergeben.

4. Fügesystemkopf nach Anspruch 3, **dadurch gekennzeichnet, daß** das Fügewerkzeug (32) an dem Endbereich des Trägers (26) drehbar gelagert ist und daß die Ladeantriebseinrichtung (68) dazu ausgelegt ist, das Fügewerkzeug (32) hin zu der Übergabestation (44) zu drehen.

5. Fügesystemkopf nach Anspruch 3 oder 4, **dadurch gekennzeichnet, daß** die Ladeantriebseinrichtung (68) einen Motor (68) aufweist, der an dem Endbereich des Trägers (26) angeordnet ist.

6. Fügesystemkopf nach Anspruch 3 oder 4, **dadurch gekennzeichnet, daß** die Ladeantriebseinrichtung (68) einen im Bereich der Steuereinrichtung (42) angeordneten Motor (68') und ein Getriebe (80) aufweist, das Bewegungen des Motors (68') auf das Fügewerkzeug (32) überträgt.

7. Fügesystemkopf nach Anspruch 6, **dadurch gekennzeichnet, daß** der Motor (68') ein Drehmotor (68') ist und daß das Getriebe (80) ein Zugmittelgetriebe (80) ist.

8. Fügesystemkopf nach einem der Ansprüche 1 bis 7, **dadurch gekennzeichnet, daß** die Fügeantriebseinrichtung (64) durch einen elektrischen Linearmotor (64) gebildet ist.

9. Fügesystemkopf nach Anspruch 8, **dadurch gekennzeichnet, daß** die Längsachse (105) der Fügeantriebseinrichtung (64) und die Längsachse (100) der Halteeinrichtung (66) voneinander parallel beabstandet sind.

10. Fügesystemkopf nach einem der Ansprüche 1 bis 9, **dadurch gekennzeichnet, daß** die Halteeinrichtung (66) eine Mehrzahl von Backen (88) aufweist, die um die Längsachse (100) der Halteeinrichtung (66) herum verteilt angeordnet und aufeinander zu und voneinander weg beweglich sind, um jeweils ein Element (36) zu halten oder freizugeben.

11. Fügesystemkopf nach Anspruch 10, **dadurch gekennzeichnet, daß** die Halteeinrichtung (66) zwei Backen (88A, 88B) aufweist.

12. Fügesystemkopf nach Anspruch 10 oder 11, **dadurch gekennzeichnet, daß** die Backen (88) so weit voneinander weg beweglich sind, daß die Halteeinrichtung (66) das Element (36) freigeben kann, indem sie schräg zur Fügerichtung (40) von dem Element (36) abgezogen wird.

13. Fügesystemkopf nach Anspruch 12, **dadurch gekennzeichnet, daß** die Backen (88) so weit voneinander weg beweglich sind, daß die Halteeinrichtung (66) das Element (36) freigeben kann, indem sie um eine Drehachse (34) herum von dem Element (36) weg verschwenkt wird, die quer zur Fügerichtung (40) ausgerichtet ist.

14. Fügesystemkopf nach einem der Ansprüche 10 bis 13, **dadurch gekennzeichnet, daß** ein Backenaktuator (94) vorgesehen ist, der die Backen (88) aktiv öffnet und/oder schließt.

15. Fügesystemkopf nach einem der Ansprüche 10 bis 14, **dadurch gekennzeichnet, daß** die Backen (88) elastisch ausgebildet oder elastisch gelagert (132) sind, so daß sie passiv aufeinander zu und/oder voneinander weg bewegbar sind.

16. Fügesystemkopf nach einem der Ansprüche 2 bis 15, **dadurch gekennzeichnet, daß** die Übergabestation (46) an dem länglichen Träger (26) angeordnet ist.

17. Fügesystemkopf nach einem der Ansprüche 1 bis 16, **dadurch gekennzeichnet, daß** die Zuführeinrichtung (44) ein Magazin (186) für Elemente (36) aufweist.

18. Fügesystem (10) mit einem Roboter (12), der in wenigstens zwei Koordinatenachsen beweglich ist, und einem Fügesystemkopf (22), der an dem Roboter (12) befestigt ist, **dadurch gekennzeichnet, daß** der Fügesystemkopf (22) ein Fügesystemkopf(22) nach einem der Ansprüche 1 bis 17 ist.

19. Fügesystem nach Anspruch 18, **dadurch gekennzeichnet, daß** eine stationäre Vereinzelungseinrichtung (52) vereinzelte Elemente (36) hin zu der Zufuhreinrichtung (44) des Fügesystemkopfes (22) fördert.

20. Verfahren zum Zuführen von Elementen (36) von einer stationären Einheit (52) zu einem beweglichen Fügesystemkopf (22) nach einem der Ansprüche 1 bis 17 und zum Fügen von zugeführten Elementen (36) mittels des Fügesystemskopfes (22) auf Bauteile (38), wobei ein Element (36") von der stationären Einheit (52) zu dem beweglichen Fügesystemkopf (22) zugeführt wird, während der Fügesystemkopf (22) ein bereits zugeführtes Element (36) auf ein Bauteil (38) fügt.

## Claims

1. Joining system head (22) being attachable to a movable frame (12), in particular to a robot (12), and being movable into a joining position by means of a movable frame having
- a holding means (66) for an element (36) to be joined to a part ((38),
- a joining drive means (64) to move the holding means (66) along a joining direction (40) for joining, and
- a feeding means (44) to feed elements (36) to a transfer station (46) in the joining system head (22),
**characterised in that**
a control device (42) to control the joining drive device (64) is arranged at the joining system head (22) spatially distanced from the holding device (66) and the joining drive device (64), so that the holding device (66) and the joining drive device (64) form a joining tool (32) of small dimensions, and **in that** means (68) are provided to pass on the elements (36) fed to a transfer station (46) of the feeding device (44) in each instance from in front to the holding device (66).

2. Joining system head according to claim 1, **characterised in that** the joining tool (32) is mounted on an end portion of a projecting elongated carrier (26).

3. Joining system head according to claim 2, **characterised in that** the joining tool (32) is movably mounted on the end portion of the carrier (26) and **in that** a loading drive device (68) is designed to move the joining tool (32) to the transfer station (46) in order to pass on an element (36) to the holding device (66).

4. Joining system head according to claim 3, **characterised in that** the joining tool (32) is rotatably mounted on the end portion of the carrier (26) and **in that** the loading drive device (68) is designed to rotate the joining tool (32) all the way to the transfer station (44).

5. Joining system head according to claim 3 or 4, **characterised in that** the loading drive device (68) comprises a motor (68) arranged on the end portion of the carrier (26).

6. Joining system head according to claim 3 or 4, **characterised in that** the loading drive device (68) comprises a motor (68') arranged in the vicinity of the control device (42) and a transmission (80) that transmits motions of the motor (68') to the joining tool (32).

7. Joining system head according to claim 6, **characterised in that** the motor (68') is a rotary motor (68') and **in that** the transmission (80) is a tension means transmission (80).

8. Joining system head according to any of claims 1 to 7, **characterised in that** the joining drive device (64) consists of a linear electric motor (64).

9. Joining system head according to claim 8, **characterised in that** the longitudinal axis (105) of the joining drive device (64) and the longitudinal axis (100) of the holding device (66) are distanced parallel from each other.

10. Joining system head according to any of claims 1 to 9, **characterised in that** the holding device (66) comprises a plurality of jaws (88) arranged distributed around the longitudinal axis (100) of the holding device (66) and movable towards and away from each other, in each instance to hold or release an element (36).

11. Joining system head according to claim 10, **characterised in that** the holding device (66) comprises two jaws (88A, 88B).

12. Joining system head according to claim 10 or 11, **characterised in that** the jaws (88) are movable away from each other far enough so that the holding device (66) can release the element (36) by being drawn off from the element (36) oblique to the joining direction (40).

13. Joining system head according to claim 12, **characterised in that** the jaws (88) are movable away from each other far enough so that the holding device (66) can release the element (36) by being swung away from the element (36) about an axis of rotation (34) oriented transverse to the joining direction (40).

14. Joining system head according to any of claims 10 to 13, **characterised in that** a jaw actuator (94) is provided, actively opening and/or closing the jaws (88).

15. Joining system head according to any of claims 10 to 14, **characterised in that** the jaws (88) are elastically configured or elastically mounted (132) so that they are passively movable towards and/or away from each other.

16. Joining system head according to any of claims 2 to 15, **characterised in that** the transfer station (46) is arranged on the elongated carrier (26).

17. Joining system head according to any of claims 1 to 16, **characterised in that** the feeding device (44) comprise a magazine (186) for elements (36).

18. Joining system (10) having a robot (12) movable on at least two coordinate axes and a joining system head (22) fixed to the robot (12), **characterised in that** the joining system head (22) is a joining system head (22) according to any of claims 1 to 17.

19. Joining system according to claim 18, **characterised in that** a stationary individuating means (52) conveys individuated elements (36) all the way to the feeding device (44) of the joining system head (22).

20. Method of feeding elements (36) from a stationary unit (52) to a movable joining system head (22) according to anyone of claims 1 to 17 and of joining fed elements (36) by means of the joining system head (22) to parts (38), an element (36") being fed from the stationary unit (52) to the movable joining system head (22) while the joining system head (22) is joining an already fed element (36) to a part (38).

## Revendications

1. Tête de système d'assemblage (22) pouvant être fixée sur un bâti mobile (12), en particulier sur un robot (12), et pouvant être amenée dans une position d'assemblage à l'aide de ce bâti mobile, comprenant
- un dispositif de maintien (66) pour un élément (36) qui doit être monté sur un composant (38),
- un dispositif d'entraînement d'assemblage (64) destiné à déplacer le dispositif de maintien (66) en vue d'effectuer l'assemblage le long d'une direction d'assemblage (40), et
- un dispositif d'amenée (44) permettant d'amener des éléments (36) à un poste de transfert (46) dans la tête de système d'assemblage (22),
**caractérisée en ce que**
un dispositif de commande (42), destiné à commander le dispositif d'entraînement d'assemblage (64) de la tête d'assemblage (22), est disposé de façon espacée du dispositif de maintien (66) et du dispositif d'entraînement d'assemblage (64), de manière que le dispositif de maintien (66) et le dispositif d'entraînement d'assemblage (64) forment un outil d'assemblage (32) présentant des dimensions réduites, et **en ce que** des moyens (68) sont prévus pour transférer les éléments (36) acheminés au poste de transfert (46) du dispositif d'amenée (44), vers le dispositif de maintien (66), depuis l'avant de celui-ci.

2. Tête de système d'assemblage selon la revendication 1, **caractérisée en ce que** l'outil d'assemblage (32) est monté au niveau d'une partie terminale d'une poutrelle allongée (26) se projetant vers l'avant.

3. Tête de système d'assemblage selon la revendication 2, **caractérisée en ce que** l'outil d'assemblage (32) est monté de façon mobile au niveau d'une partie terminale de la poutrelle (26), et **en ce qu'**un dispositif d'entraînement de chargement (68) est conçu pour amener l'outil d'assemblage (32) jusqu'à un poste de transfert (46) en vue de transférer un élément (36) au dispositif de maintien (66).

4. Tête de système d'assemblage selon la revendication 3, **caractérisée en ce que** l'outil d'assemblage (32) est monté de façon pivotante au niveau d'une partie terminale de la poutrelle (26), et **en ce que** le dispositif d'entraînement de chargement (68) est conçu pour faire pivoter l'outil d'assemblage (32) vers le poste de transfert (44).

5. Tête de système d'assemblage selon la revendication 3 ou 4, **caractérisée en ce que** le dispositif d'entraînement de chargement (68) comporte un moteur (68) qui est disposé au niveau d'une partie terminale de la poutrelle (26).

6. Tête de système d'assemblage selon la revendication 3 ou 4, **caractérisée en ce que** le dispositif d'entraînement de chargement (68) comprend un moteur (68') et une transmission (80) montés au niveau du dispositif de commande (42), la transmission transmettant les mouvements du moteur (68') à l'outil d'assemblage (32).

7. Tête de système d'assemblage selon la revendication 6, **caractérisée en ce que** le moteur (68') est un moteur de rotation (68'), et que la transmission (80) est une transmission par moyens de traction (80).

8. Tête de système d'assemblage selon l'une des revendications 1 à 7, **caractérisée en ce que** le dispositif d'entraînement d'assemblage (64) est constitué d'un moteur électrique linéaire (64).

9. Tête de système d'assemblage selon la revendication 8, **caractérisée en ce que** l'axe longitudinal (105) du dispositif d'entraînement d'assemblage (64) et l'axe longitudinal (100) du dispositif de maintien (66) sont espacés parallèlement l'un à l'autre.

10. Tête de système d'assemblage selon l'une des revendications 1 à 9, **caractérisée en ce que** le dispositif de maintien (66) comprend une multitude de mâchoires (88) qui sont disposées autour de l'axe longitudinal (100) du dispositif de maintien (66) et peuvent être déplacées en se rapprochant et en s'écartant les unes des autres, de façon à retenir ou à relâcher un élément (36).

11. Tête de système d'assemblage selon la revendication 10, **caractérisée en ce que** le dispositif de maintien (66) comprend deux mâchoires (88A, 88B).

12. Tête de système d'assemblage selon l'une des revendications 10 ou 11, **caractérisée en ce que** les mâchoires (88) peuvent être écartées les unes des autres à un point tel que le dispositif de maintien (66) puisse relâcher l'élément (36) en étant retiré de l'élément (36) dans une direction oblique par rapport à la direction d'assemblage (40).

13. Tête de système d'assemblage selon la revendication 12, **caractérisée en ce que** les mâchoires (88) peuvent être écartées les unes des autres à un point tel que le dispositif de maintien (66) puisse relâcher l'élément (36) en effectuant une rotation autour d'un axe de rotation (34), en s'éloignant de l'élément (36), cet axe étant dirigé transversalement à la direction d'assemblage (40).

14. Tête de système d'assemblage selon l'une des revendications 10 à 13, **caractérisée en ce qu'**un actionneur (94) des mâchoires est prévu, qui ouvre et/ou ferme les mâchoires (88) de façon active.

15. Tête de système d'assemblage selon l'une des revendications 10 à 14, **caractérisée en ce que** les mâchoires (88) sont configurées ou montées de façon élastique (132) de manière à pouvoir être rapprochées et/ou écartées les unes des autres de façon passive.

16. Tête de système d'assemblage selon l'une des revendications 2 à 15, **caractérisée en ce que** le poste de transfert (46) est monté sur la poutrelle allongée (26).

17. Tête de système d'assemblage selon l'une des revendications 1 à 16, **caractérisée en ce que** le dispositif d'amenée (44) comprend un magasin (186) pour les éléments (36).

18. Système d'assemblage (10) comprenant un robot (12) pouvant être déplacé dans au moins deux axes de coordonnées, et une tête de système d'assemblage (22) fixée sur le robot (12), **caractérisé en ce que** la tête de système d'assemblage (22) est une tête de système d'assemblage (22) selon l'une des revendications 1 à 17.

19. Système d'assemblage selon la revendication 18, **caractérisé en ce qu'**un dispositif stationnaire d'individualisation (52) achemine des éléments détachés individuels (36) vers le dispositif d'amenée (44) de la tête de système d'assemblage (22).

20. Procédé d'amenée d'éléments (36) depuis une unité stationnaire (52) vers une tête mobile (22) de système d'assemblage selon l'une des revendications 1 à 17, et de montage d'éléments (36) ainsi amenés, au moyen de la tête de système d'assemblage (22), sur des composants (38), où un élément (36") est amené depuis l'unité stationnaire (52) vers la tête mobile (22) de système d'assemblage, pendant que la tête de système d'assemblage (22) monte un élément déjà amené (36) sur un composant (38).
